# EUROPÄISCHE PATENTANMELDUNG

(11) **EP 4 718 686 A1**
(43) Veröffentlichungstag der Anmeldung: **01.04.2026**
(21) Anmeldenummer: 25197381.4
(22) Anmeldetag: 21.08.2025
(51) Int. Cl.: H02K 5/20, H02K 9/06, H02K 5/18

(54) **TRAKTIONSMOTOR MIT KÜHLEINRICHTUNG**

(30) Priorität: 30.09.2024 DE 102024209540
(71) Anmelder: Siemens Mobility GmbH, 80997 München (DE)
(72) Erfinder: Eberler, Josef, 92318 Neumarkt/Opf. (DE)
(74) Vertreter: Siemens Patent Attorneys

(57) **Zusammenfassung**

Die Erfindung betrifft einen Traktionsmotor für ein Schienenfahrzeug (1). Er umfasst ein Motorgehäuse (19) mit einem von diesem umgrenzten Innenraum (20). Ferner umfasst er einen im Innenraum (20) angeordneten Stator (24) mit einem am Motorgehäuse (19) drehfest befestigten, hohlzylindrischen Statorblechpaket (25), welches Statorzähne (26) und zwischen diesen angeordnete Statornuten (27) aufweist, und mit einer in den Statornuten (27) verteilt verlegten Statorwicklung (30). Des Weiteren umfasst er einen Rotor (32) mit einem innerhalb des Statorblechpakets (25) liegenden Rotorblechpaket (33), welches sich auf eine um eine Rotorachse (18) drehbar im Motorgehäuse (19) gelagerte Motorwelle (34) abstützt. Außerdem umfasst er eine Kühleinrichtung (35) mit einem Lufteinlass (36) zum Zuführen von Kühlluft in den Innenraum (20), mit einem Luftauslass (37) zum Abführen von Kühlluft aus dem Innenraum (20), mit Kühlkanälen (38) zur Führung von Kühlluft innerhalb des Innenraums (20) und mit einem mit der Motorwelle (34) drehfest verbundenen Lüfterrad (39) zur Förderung von Kühlluft durch die Kühlkanäle (38). Erfindungsgemäß weist das Motorgehäuse (19) einen hohlzylindrischen Gehäusemantel (21) mit einem Außenkühlabschnitt (20A) und einem Innenkühlabschnitt (20I) auf, welche sich nicht oder zumindest teilweise nicht überlappen, wobei am Gehäusemantel (21) über den Außenkühlabschnitt (20A) verteilt angeordnete und radial nach außen abstehende Kühlrippen (40) für eine Wärmabfuhr durch Fahrtwind angeformt sind, und wobei am Gehäusemantel (21) über den Innenkühlabschnitt (20I) verteilt angeordnete Kühlkanäle (38) zur Führung von Kühlluft innerhalb des Innenraums (20) eingeformt sind. Hierdurch wird ein Traktionsmotor (12) bereitgestellt, dessen Kühleinrichtung (35) effizienter und geräuschärmer betrieben werden kann.

## Beschreibung

Die Erfindung betrifft einen Traktionsmotor für ein Schienenfahrzeug nach dem Oberbegriff des Patentanspruches 1.

Eine dynamoelektrische rotatorische Maschine für einen solchen Traktionsantrieb eines Schienenfahrzeugs ist aus der europäischen Veröffentlichung EP 3 611 828 A1 bekannt. Die Maschine umfasst ein Gehäuse, in dem ein Stator und ein Rotor angeordnet sind. Der Stator weist ein in axial verlaufenden Nuten angeordnetes Wicklungssystem auf, das an den axialen Stirnseiten des Stators jeweils Wickelköpfe ausbildet. Der Rotor ist vom Stator durch einen Luftspalt beabstandet und drehfest auf einer Welle positioniert ist. Die Welle stützt sich über Lager in Lagerschilden ab. Öffnungen in den Lagerschilden und/oder im Gehäuse dienen dem Einlass bzw. Auslass von Kühlluft in das beziehungsweise aus dem Gehäuse der durchzugsbelüfteten Maschine. Der Stator weist axial verlaufende Statorkühlkanäle auf. Zur Förderung der Kühlluft durch die Kühlkanäle kann ein Eigenlüfter vorgesehen sein.

Die Kühleinrichtung solcher durchzugsbelüfteten Traktionsmotoren mit Eigenlüfter sind günstig und robuste, um im Betrieb entstehende Verlustwärme aus dem Stator abführen zu können. Zur Vermeidung einer Überhitzung des Traktionsmotors sind entsprechend groß dimensionierte Eigenlüfter im Einsatz. Um den erforderlichen Massenstrom an Kühlluft bereitzustellen, muss der Eigenlüfter mit entsprechend hohen Drehzahlen betrieben werden. Mit steigender Drehzahl des Eigenlüfters nehmen die durch diesen verursachten Geräuschentwicklungen und Reibungsverluste zu, was zu entsprechend höheren Gesamtverlusten im Schienenfahrzeug führt.

Der Erfindung liegt daher die Aufgabe zugrunde, einen gattungsgemäßen Traktionsmotor bereitzustellen, dessen Kühleinrichtung effizienter und geräuschärmer betrieben werden kann.

Die Aufgabe wird gelöst durch einen gattungsgemäßen Traktionsmotor mit den im kennzeichnenden Teil des Patentanspruches 1 angegebenen Merkmalen.

Demnach geht die Erfindung aus von einem Traktionsmotor für ein Schienenfahrzeug, beispielsweise für eine Lokomotive oder einen Triebzug. Der Traktionsmotor umfasst ein Motorgehäuse mit einem von diesem umgrenzten Innenraum. Das Motorgehäuse kann durch einen hohlzylindrischen Gehäusemantel gebildet sein, welcher stirnseitig durch je einen Lagerschild verschlossen ist. Der Traktionsmotor umfasst ferner einen im Innenraum angeordneten Stator, der ein am Motorgehäuse drehfest befestigtes, hohlzylindrisches Statorblechpaket aufweist. Das Statorblechpaket weist Statorzähne und zwischen diesen angeordnete Statornuten auf. Dabei kann das Statorblechpaket ein hohlzylindrisches Statorjoch aufweisen, von dessen Statorinnenfläche axial ausgerichtete Statorzähne radial nach innen ragen. Der Stator weist ferner eine in den Statornuten verteilt verlegte Statorwicklung auf. Aus den axialen Stirnseiten des Statorblechpakets können Wickelköpfe der Statorwicklung herausragen. Der Traktionsmotor umfasst außerdem einen Rotor mit einem innerhalb des Statorblechpakets liegenden Rotorblechpaket. Das Rotorblechpaket stützt sich auf eine Motorwelle ab, welche um eine Rotorachse drehbar im Motorgehäuse gelagert ist. Je nach Motorentyp kann der Rotor als Käfigrotor, als Reluktanzrotor oder mit Permanentmagneten bestückt ausgebildet sein. Des Weiteren umfasst der Traktionsmotor eine Kühleinrichtung zur Wärmeabfuhr von im Betrieb des Traktionsmotors entstehender Verlustwärme. Die Kühleinrichtung weist einen Lufteinlass zum Zuführen von Kühlluft in den Innenraum und einen Luftauslass zum Abführen von Kühlluft aus dem Innenraum auf. Lufteinlass und Luftauslass können jeweils durch eine oder mehrere Einlass- beziehungsweise Auslassöffnungen gebildet sein. Lufteinlass und Luftauslass können jeweils durch den Gehäusemantel und/oder durch einen oder beide Lagerschilde führen. Zur Führung von Kühlluft innerhalb des Innenraums weist die Kühleinrichtung ferner Kühlkanäle auf. Die Kühlkanäle können axial ausgerichtet sein oder auch anders verlaufende Kühlwege bilden. Die Kühleinrichtung weist zur Förderung von Kühlluft durch die Kühlkanäle ein mit der Motorwelle drehfest verbundenes Lüfterrad auf. Das im Innenraum angeordnete Lüfterrad kann derart gestaltet sein, dass es einen Kühlluftstrom axial ansaugt und radial nach außen abführt.

Erfindungsgemäß weist das Motorgehäuse einen hohlzylindrischen Gehäusemantel mit einem Außenkühlabschnitt und einem Innenkühlabschnitt auf, welche sich nicht oder zumindest teilweise nicht überlappen. Eine Überlappung kann Kühlabschnitte kann weniger als 30 %, verzugsweise weniger als 20 % und besonders bevorzugst weniger als 10 % betragen. Jeder der Kühlabschnitte kann sich beispielsweise über die Länge des Gehäusemantels und über einen definierten Umfangswinkel des Gehäusemantels erstrecken. Am Gehäusemantel sind dabei über den Außenkühlabschnitt verteilt angeordnete und radial nach außen abstehende Kühlrippen für eine Wärmabfuhr durch Fahrtwind angeformt. Die Kühlrippen können von einer Mantelaußenfläche des Gehäusemantels radial nach außen emporragen. Am Gehäusemantel sind über den Innenkühlabschnitt verteilt angeordnete Kühlkanäle zur Führung von Kühlluft innerhalb des Innenraums eingeformt. Die Kühlkanäle können durch das Statorblechpaket nahe einer Statoraußenfläche des Statorblechpakets verlaufen. Sie können durch Nuten in der Statoraußenfläche des Statorblechpakets verlaufen, welche durch den Gehäusemantel abgedeckt sind. Indem im Außenkühlabschnitt des Gehäusemantels Verlustwärme durch äußere Kühlrippen über den Fahrtwind im Betrieb des Schienenfahrzeugs abgeführt wird, können im Außenkühlabschnitt Kühlkanäle vollständig oder überwiegend eingespart werden. Es genügt vielmehr, die Verlustwärme im Innenkühlabschnitt durch Kühlkanäle beziehungsweise durch die hierdurch strömende Kühlluft abzuführen. Indem Kühlluft nur durch Kühlkanäle im Innenkühlabschnitt des Gehäusemantels befördert werden muss, kann der erforderliche Massenstrom an durch das Lüfterrad zu fördernder Kühlluft gesenkt werden. Die geringeren Drehzahlen verringern sowohl die Geräuschemissionen als auch die Reibungsverluste des Eigenlüfters. Dies erlaubt es, Traktionsmotoren mit einer effizienten und leisen Kühleinrichtung bereitzustellen, ohne signifikante Mehrkosten in der Herstellung zu verursachen, verbunden mit einer höheren Energieeffizienz.

In einer vorteilhaften Ausführungsform des erfindungsgemäßen Traktionsmotors ist der Außenkühlabschnitt durch eine Unterseite des Gehäusemantels gebildet, wobei die Kühlrippen vertikal nach unten ragen. Die Kühlrippen können alternativ in Bezug auf die Rotorachse radial nach unten ragen. Der Außenkühlabschnitt kann sich über etwa 1/6 des Gehäusemantels erstrecken. Die Unterseite des Gehäusemantels weist in der Einbaulage des Traktionsmotors in einem Triebdrehgestell nach unten zum vom Schienenfahrzeug befahrenen Gleis hin und ist damit nicht vom Drehgestellrahmen oder dem Untergestell eines Wagenkastens des Schienenfahrzeugs verdeckt, wie es die Oberseite des Gehäusemantels oder daran angrenzende Seitenflächen sind. Damit überstreicht der Fahrtwind ungehindert die an der Unterseite des Gehäusemantels vertikal nach unten ragenden Kühlrippen und kann Verlustwärme effektiv abführen.

In einer weiteren vorteilhaften Ausführungsform des erfindungsgemäßen Traktionsmotors sind die Kühlrippen parallel und in Fahrtrichtung des Schienenfahrzeuges ausgerichtet. Durch die zueinander parallele Ausrichtung der Kühlrippen werden zwischen den Kühlrippen Kühlrinnen gebildet, die vom Fahrtwind ungehindert durchströmt werden, wenn die Kühlrippen parallel zur Fahrtrichtung des Schienenfahrzeugs ausgerichtet sind. Ist die Rotorachse des im Triebdrehgestell verbauten Traktionsmotors beispielsweise quer zur Fahrtrichtung ausgerichtet, erstrecken sich die Kühlrippen quer zur Rotorachse. Erstreckt sich die Rotorachse des Traktionsmotors längs der Fahrtrichtung des Schienenfahrzeugs, so sind die Kühlrippen parallel zur Rotorachse ausgerichtet. Dadurch strömt ein maximaler Massenstrom an kühlendem Fahrtwind durch die Kühlrinnen entlang der Kühlrippen zur optimalen Kühlung über die Unterseite des Gehäusemantels.

In einer weiteren vorteilhaften Ausführungsform des erfindungsgemäßen Traktionsmotors weisen die Kühlrippen jeweils eine horizontale Unterkante auf, die in einer gemeinsamen Ebene liegen. Indem die Unterkanten der Kühlrippen horizontal verlaufen und in einer gemeinsamen Eben liegen, können die Kühlrippen eine größtmögliche Rippenhöhe aufweisen und eine vorgegebenen Mindestabstand über Schienenoberkante des befahrenen Gleises einhalten. Damit wird bei Einhaltung des Lichtraumprofiles eine große Kühlfläche der Kühlrippen für eine effektive Abfuhr der Verlustwärme aus der Unterseite des Gehäusemantels erzielt.

In einer weiteren vorteilhaften Ausführungsform des erfindungsgemäßen Traktionsmotors sind die Kühlkanäle durch in eine Mantelinnenfläche des Gehäusemantels eingeformte und durch eine Statoraußenfläche des Statorblechpakets abgedeckte Gehäusenuten gebildet. Die Gehäusenuten können sich längs, quer, schräg oder mäanderförmig zur Rotorachse erstrecken und sich von einer Mantelinnenfläche des Gehäusemantels aus radial nach außen, also in den Gehäusemantel hinein vertiefen. Das die Kühlkanäle abdeckende Statorjoch kann dabei eine zylindrische Statoraußenfläche aufweisen. In die Statoraußenfläche können aber auch Jochnuten eingeformt sein, welche mit den Gehäusenuten die Kühlkanäle bilden. Ebenso kann die Statoraußenfläche radial nach außen abstehende Stiftrippen aufweisen, die ein durch eine zylindrische Mantelinnenfläche des Gehäusemantels abgedecktes Kühlwegelabyrinth bildet. Aufgrund der Kühlrippen im Außenkühlabschnitt des Gehäusemantels genügt es, die Kühlkanäle im Innenkühlabschnitt des Gehäusemantels vorzusehen, so dass insgesamt eine effektive Kühlwirkung über den gesamten Gehäusemantel bereitgestellt wird. Die Drehzahl des die Kühlluft durch die Kühlkanäle fordernden Lüfterrades kann dadurch reduziert werden.

In einer weiteren vorteilhaften Ausführungsform des erfindungsgemäßen Traktionsmotors verlaufen die Kühlkanäle parallel zur Rotorachse. Der parallele Verlauf der Kühlkanäle ist aufgrund seiner Symmetrie besonders einfach herzustellen und deckt den Innenkühlabschnitt des Gehäusemantels für eine gleichmäßige Kühlung des Stators gut ab.

In einer weiteren vorteilhaften Ausführungsform des erfindungsgemäßen Traktionsmotors weist der Innenraum einen ersten Ringraum und einen zweiten Ringraum auf. Der erste Ringraum grenzt axial an eine erste Stirnseite des Statorblechpakets, wobei der Lufteinlass in den ersten Ringraum mündet. Der erste Ringraum kann ferner axial durch einen ersten Lagerschild begrenzt sein. Der zweite Ringraum grenzt axial an eine der ersten Stirnseite gegenüberliegende, zweite Stirnseite des Statorblechpakets, wobei der Luftauslass aus dem zweiten Ringraum führt. Der zweite Ringraum kann ferner axial durch einen dem ersten Lagenschild gegenüberliegenden, zweiten Lagerschild begrenzt sein. Dabei verbinden die Kühlkanäle den ersten Ringraum und den zweiten Ringraum fluidisch miteinander. In den ersten Ringraum ragen erste Wickelköpfe der Statorwicklung und in den zweiten Ringraum ragen zweite Wickelköpfe der Statorwicklung hinein. Der erste Ringraum kann als Verteilerraum für die eingelassene Kühlluft dienen, wobei der darin um die Rotorachse zirkulierende Kühlluftstrom die ersten Wickelköpfe kühlt, bevor er in die Kühlkanäle einströmt. Beim Durchströmen der Kühlkanäle nimmt die Kühlluft Verlustwärme aus dem Statorblechpaket auf, bevor sie in den zweiten Ringraum strömt, der als Sammelraum dienen kann. Dort zirkuliert die Kühlluft um die Rotorachse und kühlt die zweiten Wickelköpfe, bevor sie vom Lüfterrad durch den Luftauslass aus dem Motorgehäuse befördert wird.

Die Erfindung betrifft ferner ein Triebdrehgestell für ein Schienenfahrzeug, insbesondere für einen Triebzug im Hochgeschwindigkeitsbetrieb, nach Anspruch 8. Es umfasst einen Drehgestellrahmen, einen im Drehgestellrahmen über Radsatzlager gelagerten Radsatz mit zwei durch eine Radsatzwelle drehstarr miteinander verbundenen Radscheiben, und einen sich am Drehgestellrahmen abstützenden Traktionsmotor nach einem der Ansprüche 1 bis 7.

Die Erfindung betrifft außerdem ein Schienenfahrzeug, insbesondere Triebzug im Hochgeschwindigkeitsbetrieb, nach Anspruch 9. Es umfass ein Triebdrehgestell nach Anspruch 8 und einen sich federnd auf dem Triebdrehgestell abstützenden Wagenkasten.

Weitere Eigenschaften und Vorteile der Erfindung ergeben sich aus nachfolgender Beschreibung eines Ausführungsbeispiels anhand der Zeichnungen, in deren
FIG 1 ein erfindungsgemäßes Schienenfahrzeug in Seitenansicht,
FIG 2 ein Teilschnitt eines erfindungsgemäßen Triebdrehgestells des Schienenfahrzeugs aus FIG 1 in Draufsicht mit einem erfindungsgemäßen Traktionsmotor,
FIG 3 ein Querschnitt durch den Traktionsmotor aus FIG 2 und
FIG 4 ein Längsschnitt durch den Traktionsmotor aus FIG 2

### schematisch veranschaulicht sind.

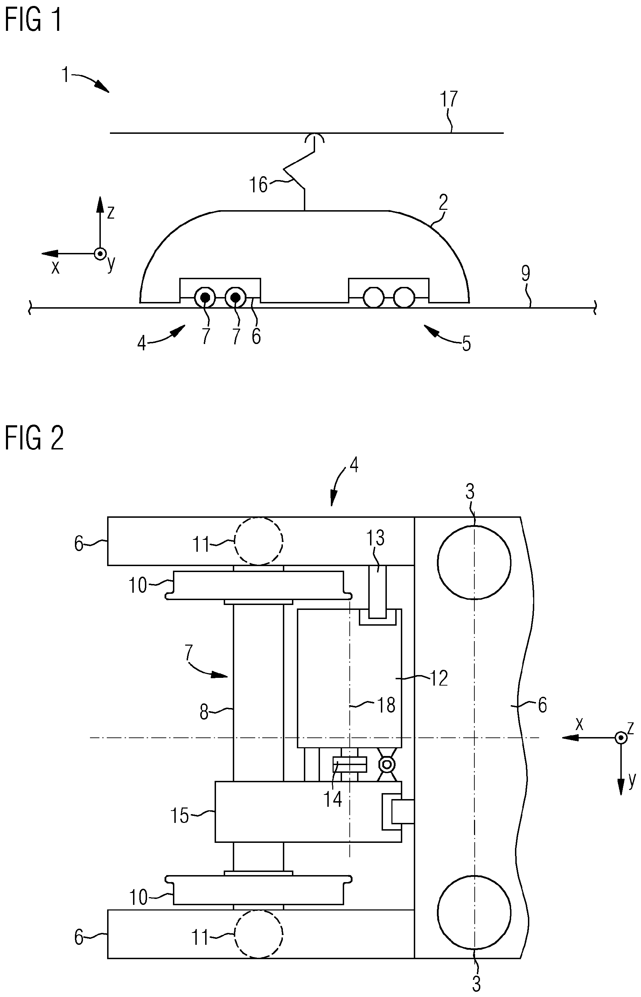

Gemäß FIG 1 und FIG 2 kann ein erfindungsgemäßes Schienenfahrzeug 1 durch eine Lokomotive oder einen Triebzug, insbesondere für den Hochgeschwindigkeitsbetrieb, gebildet sein. Das Schienenfahrzeug 1 umfasst einen Wagenkasten 2, der sich auf zwei Drehgestelle über eine Sekundärfederung 3 federnd abstützt, nämlich auf ein angetriebenes Triebdrehgestell 4 und auf ein nicht angetriebenes Laufdrehgestell 5. Das Triebdrehgestell 4 umfasst einen Drehgestellrahmen 6 mit zwei Radsätzen 7, von welchen in FIG 2 nur einer dargestellt ist. Jeder Radsatz 7 umfasst eine Radsatzwelle 8, über die zwei auf Schienen eines Gleises 9 abrollbare Radscheiben 10 drehfest verbunden sind. Jede Radsatzwelle 8 ist in zwei nicht näher dargestellten Radsatzlagern drehbar gelagert, auf die sich der Drehgestellrahmen 6 über eine Primärfederung 11 federnd abstützt. Ein erfindungsgemäßer Traktionsmotor 12 ist über ein oder mehrere Abstützelemente 13 am Drehgestellrahmen 6 befestigt und überträgt sein Drehmoment über eine Kupplung 14 und ein Getriebe 15 auf die Radsatzwelle 8. Eine Rotorachse 18 des Traktionsmotors 12 ist dabei parallel zu einer Fahrzeugquerrichtung Y ausgerichtet, die jeweils senkrecht auf einer Fahrzeuglängsrichtung X und einer Fahrzeughochrichtung Z seht. Zur Energieversorgung des Traktionsmotors 12 umfasst das Schienenfahrzeug 1 einen dachseitig angeordneten Stromabnehmer 16, der zur Einspeisung elektrischer Energie einen elektrischen Schleifkontakt zum Fahrdraht 17 einer an sich bekannten Oberleitungsanlage herstellt.

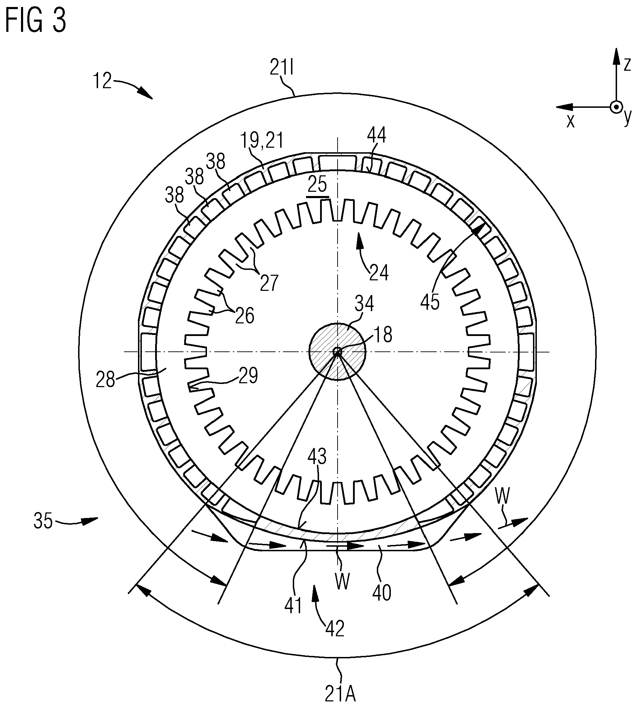

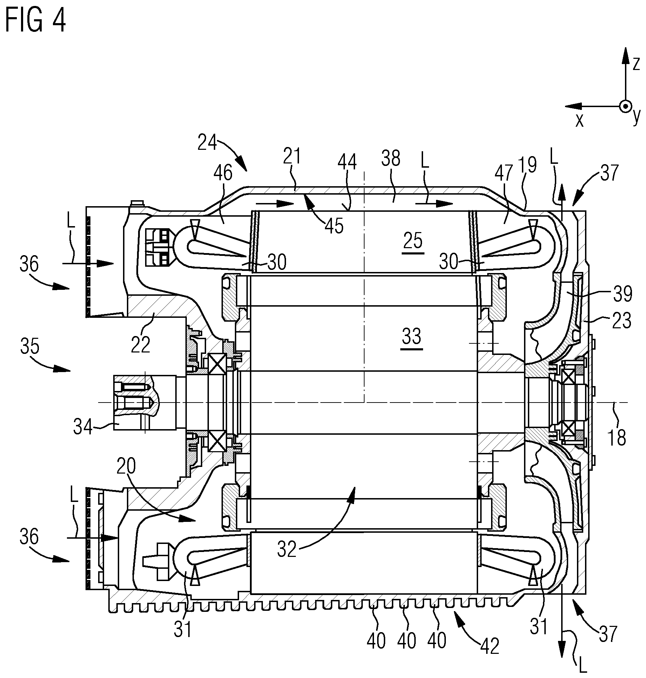

Gemäß FIG 3 und FIG 4 umfasst der Traktionsmotor 12 ein Motorgehäuse 19 mit einem von diesem umgrenzten Innenraum 20. Das Motorgehäuse 19 ist durch einen hohlzylindrischen Gehäusemantel 21 gebildet sein, welcher stirnseitig durch je einen Lagerschild 22, 23 verschlossen ist. Der Traktionsmotor 12 umfasst ferner einen im Innenraum 20 angeordneten Stator 24, der ein am Motorgehäuse 19 drehfest befestigtes, hohlzylindrisches Statorblechpaket 25 aufweist. Das Statorblechpaket 25 weist Statorzähne 26 und zwischen diesen angeordnete Statornuten 27 auf. Dabei weist das Statorblechpaket 25 ein hohlzylindrisches Statorjoch 28 auf, von dessen Statorinnenfläche 29 axial ausgerichtete Statorzähne 26 radial nach innen ragen. Der Stator 24 weist ferner eine in den Statornuten 27 verteilt verlegte Statorwicklung 30 auf. Aus den axialen Stirnseiten des Statorblechpakets 25 ragen Wickelköpfe 31 der Statorwicklung 30 heraus. Der Traktionsmotor 12 umfasst außerdem einen Rotor 32 mit einem innerhalb des Statorblechpakets 25 liegenden Rotorblechpaket 33. Das Rotorblechpaket 33 stützt sich auf eine Motorwelle 34 ab, welche um die Rotorachse 18 drehbar im Motorgehäuse 19 gelagert ist. Je nach Motorentyp kann der Rotor 32 als hier dargestellter Käfigrotor oder als Reluktanzrotor oder mit Permanentmagneten bestückt ausgebildet sein.

Des Weiteren umfasst der Traktionsmotor 12 eine Kühleinrichtung 35 zur Wärmeabfuhr von im Betrieb des Traktionsmotors 12 entstehender Verlustwärme. Die Kühleinrichtung 35 weist einen Lufteinlass 36 zum Zuführen von Kühlluft, in FIG 4 durch Luftströmungspfeile L angedeutet, in den Innenraum 20 und einen Luftauslass 37 zum Abführen von Kühlluft aus dem Innenraum 20 auf. Lufteinlass 36 und Luftauslass 37 können jeweils durch eine oder mehrere Einlassbeziehungsweise Auslassöffnungen gebildet sein. Lufteinlass 36 und Luftauslass 37 können jeweils durch den Gehäusemantel 21 und/oder durch einen oder beide Lagerschilde 22, 23 führen. Zur Führung von Kühlluft innerhalb des Innenraums 20 weist die Kühleinrichtung 35 ferner Kühlkanäle 38 auf. Die Kühlkanäle 38 sind axial ausgerichtet, können aber auch anders verlaufende Kühlwege bilden. Die Kühleinrichtung 35 weist zur Förderung von Kühlluft durch die Kühlkanäle 38 ein mit der Motorwelle 34 drehfest verbundenes Lüfterrad 39 auf. Das im Innenraum 20 angeordnete Lüfterrad 39 kann derart gestaltet sein, dass es einen Kühlluftstrom axial ansaugt und radial nach außen abführt.

Erfindungsgemäß weist das Motorgehäuse 19 einen hohlzylindrischen Gehäusemantel 21 mit einem Außenkühlabschnitt 21A und einem Innenkühlabschnitt 211 auf, welche sich nicht oder zumindest teilweise nicht überlappen. Eine Überlappung kann Kühlabschnitte 21A, 21I kann weniger als 30 %, verzugsweise weniger als 20 % und besonders bevorzugst weniger als 10 % betragen. Jeder der Kühlabschnitte 21A, 21I kann sich beispielsweise über die Länge des Gehäusemantels 21 und über einen definierten Umfangswinkel des Gehäusemantels 21 erstrecken, wie in FIG 3 dargestellt. Am Gehäusemantel 21 sind dabei über den Außenkühlabschnitt 21A verteilt angeordnete und radial nach außen abstehende Kühlrippen 40 für eine Wärmabfuhr durch Fahrtwind, in FIG 3 durch Windrichtungspfeile W angedeutet, angeformt. Die Kühlrippen 40 können von einer Mantelaußenfläche 41 des Gehäusemantels 21 radial nach außen emporragen. Am Gehäusemantel 21 sind, über den Innenkühlabschnitt 21I verteilt angeordnet, die Kühlkanäle 38 zur Führung von Kühlluft innerhalb des Innenraums 20 eingeformt. Die Kühlkanäle 38 können durch das Statorblechpaket 25 nahe einer Mantelaußenfläche 42 des Statorblechpakets 25 verlaufen. Sie können durch Nuten in der Mantelaußenfläche 42 des Statorblechpakets 25 verlaufen, welche durch den Gehäusemantel 21 abgedeckt sind. Indem im Außenkühlabschnitt 21A des Gehäusemantels 21 Verlustwärme durch äußere Kühlrippen 40 über den Fahrtwind im Betrieb des Schienenfahrzeugs 1 abgeführt wird, können im Außenkühlabschnitt 20A Kühlkanäle 38 vollständig oder überwiegend eingespart werden. Es genügt vielmehr, die Verlustwärme im Innenkühlabschnitt 20I durch Kühlkanäle 38 beziehungsweise durch die hierdurch strömende Kühlluft abzuführen. Indem Kühlluft nur durch Kühlkanäle 38 im Innenkühlabschnitt 211 des Gehäusemantels 21 befördert werden muss, kann der erforderliche Massenstrom an durch das Lüfterrad 39 zu fördernder Kühlluft gesenkt werden. Die geringeren Drehzahlen verringern sowohl die Geräuschemissionen als auch die Reibungsverluste des Eigenlüfters 39. Dies erlaubt es, Traktionsmotoren 12 mit einer effizienten und leisen Kühleinrichtung 35 bereitzustellen, ohne signifikante Mehrkosten in der Herstellung zu verursachen, verbunden mit einer höheren Energieeffizienz.

Der Außenkühlabschnitt 21A ist gemäß FIG 3 und FIG 4 durch eine Unterseite des Gehäusemantels 21 gebildet, wobei die Kühlrippen 40 vertikal nach unten ragen. Die Kühlrippen 40 können alternativ in Bezug auf die Rotorachse 18 radial nach unten ragen. Der Außenkühlabschnitt 20A kann sich über etwa 1/6 des Gehäusemantels 21 erstrecken. Die Unterseite des Gehäusemantels 21 weist in der Einbaulage des Traktionsmotors 12 im Triebdrehgestell 4 nach unten zum vom Schienenfahrzeug 1 befahrenen Gleis 9 hin und ist damit nicht vom Drehgestellrahmen 6 oder dem Untergestell eines Wagenkastens 2 des Schienenfahrzeugs 1 verdeckt, wie es die Oberseite des Gehäusemantels 21 oder daran angrenzende Seitenflächen sind. Damit überstreicht der Fahrtwind ungehindert die an der Unterseite des Gehäusemantels 21 vertikal nach unten ragenden Kühlrippen 40 und kann Verlustwärme effektiv abführen.

Die Kühlrippen 40 sind parallel und in Fahrtrichtung X des Schienenfahrzeuges 1 ausgerichtet. Durch die zueinander parallele Ausrichtung der Kühlrippen 40 werden zwischen den Kühlrippen 40 Kühlrinnen gebildet, die vom Fahrtwind ungehindert durchströmt werden, wenn die Kühlrippen 40 parallel zur Fahrzeuglängsrichtung X des Schienenfahrzeugs 1 ausgerichtet sind. Ist die Rotorachse 18 des im Triebdrehgestell 4 verbauten Traktionsmotors 12 beispielsweise quer zur Fahrzeuglängsrichtung X ausgerichtet, erstrecken sich die Kühlrippen 40 quer zur Rotorachse 18 - also entlang einer Fahrzeugquerrichtung Y. Dadurch strömt ein maximaler Massenstrom an kühlendem Fahrtwind durch die Kühlrinnen entlang der Kühlrippen 40 zur optimalen Kühlung über die Unterseite des Gehäusemantels 21.

Die Kühlrippen 40 weisen jeweils eine horizontale Unterkante 42 auf, die in einer gemeinsamen Ebene liegen. Indem die Unterkanten 42 der Kühlrippen 40 horizontal verlaufen und in einer gemeinsamen Eben liegen, können die Kühlrippen 40 eine größtmögliche Rippenhöhe aufweisen und eine vorgegebenen Mindestabstand über Schienenoberkante des befahrenen Gleises 9 einhalten. Damit wird bei Einhaltung des Lichtraumprofiles eine große Kühlfläche der Kühlrippen 40 für eine effektive Abfuhr der Verlustwärme aus der Unterseite des Gehäusemantels 21 erzielt.

Die Kühlkanäle 38 sind gemäß FIG 3 und FIG 4 durch in eine Mantelinnenfläche 43 des Gehäusemantels 21 eingeformte und durch eine Statoraußenfläche 44 des Statorblechpakets 25 abgedeckte Gehäusenuten 45 gebildet. Die Gehäusenuten 45 können sich wie dargestellt längs, aber auch quer, schräg oder mäanderförmig zur Rotorachse 18 erstrecken und sich von einer Mantelinnenfläche 43 des Gehäusemantels 21 aus radial nach außen, also in den Gehäusemantel 21 hinein vertiefen. Das die Kühlkanäle 38 abdeckende Statorjoch 28 kann weist dabei die zylindrische Statoraußenfläche 44 auf. Aufgrund der Kühlrippen 40 im Außenkühlabschnitt 21A des Gehäusemantels 21 genügt es, die Kühlkanäle 38 im Innenkühlabschnitt 21I des Gehäusemantels 21 vorzusehen, so dass insgesamt eine effektive Kühlwirkung über den gesamten Gehäusemantel 21 bereitgestellt wird. Die Drehzahl des die Kühlluft durch die Kühlkanäle 38 fordernden Lüfterrades 39 kann dadurch reduziert werden.

Die Kühlkanäle 38 verlaufen parallel zur Rotorachse 18. Der parallele Verlauf der Kühlkanäle 38 ist aufgrund seiner Symmetrie besonders einfach herzustellen und deckt den Innenkühlabschnitt 21I des Gehäusemantels 21 für eine gleichmäßige Kühlung des Stators 24 gut ab.

Der Innenraum 20 des Motorgehäuses 19 weist einen ersten Ringraum 46 und einen zweiten Ringraum 47 auf. Der erste Ringraum 46 grenzt axial an eine erste Stirnseite des Statorblechpakets 25, wobei der Lufteinlass 36 in den ersten Ringraum 46 mündet. Der erste Ringraum 46 kann ferner axial durch den ersten Lagerschild 22 begrenzt sein. Der zweite Ringraum 47 grenzt axial an eine der ersten Stirnseite gegenüberliegende, zweite Stirnseite des Statorblechpakets 25, wobei der Luftauslass 37 aus dem zweiten Ringraum 47 führt. Der zweite Ringraum 47 kann ferner axial durch den dem ersten Lagenschild 22 gegenüberliegenden, zweiten Lagerschild 23 begrenzt sein. Dabei verbinden die Kühlkanäle 38 den ersten Ringraum 46 und den zweiten Ringraum 47 fluidisch miteinander. In den ersten Ringraum 46 ragen die ersten Wickelköpfe 31 der Statorwicklung 30 und in den zweiten Ringraum 47 ragen zweite Wickelköpfe 30 der Statorwicklung 30 hinein. Der erste Ringraum 46 dient als Verteilerraum für die eingelassene Kühlluft, wobei der darin um die Rotorachse zirkulierende Kühlluftstrom die ersten Wickelköpfe 30 kühlt, bevor er in die Kühlkanäle 38 einströmt. Beim Durchströmen der Kühlkanäle 38 nimmt die Kühlluft Verlustwärme aus dem Statorblechpaket 25 auf, bevor sie in den zweiten Ringraum 47 strömt, der als Sammelraum für die den Stator 25 verlassende Kühlluft dient. Dort zirkuliert die Kühlluft um die Rotorachse 18 und kühlt die zweiten Wickelköpfe 31, bevor sie vom Lüfterrad 39 durch den Luftauslass 37 aus dem Motorgehäuse 19 befördert wird.

### Bezugszeichenliste

- 1: Schienenfahrzeug
- 2: Wagenkasten
- 3: Sekundärfederung
- 4: Triebdrehgestell
- 5: Laufdrehgestell
- 6: Drehgestellrahmen
- 7: Radsatz
- 8: Radsatzwelle
- 9: Gleis
- 10: Radscheibe
- 11: Primärfederung
- 12: Traktionsmotor
- 13: Abstützelement
- 14: Kupplung
- 15: Getriebe
- 16: Stromabnehmer
- 17: Fahrdraht
- 18: Rotorachse
- 19: Motorgehäuse
- 20: Innenraum
- 21: Gehäusemantel
- 21A: Außenkühlabschnitt
- 21I: Innenkühlabschnitt
- 22: Lagerschild, erster
- 23: Lagerschild, zweiter
- 24: Stator
- 25: Statorblechpaket
- 26: Statorzahn
- 27: Statornut
- 28: Statorjoch
- 29: Statorinnenfläche
- 30: Statorwicklung
- 31: Wickelkopf
- 32: Rotor
- 33: Rotorblechpaket
- 34: Motorwelle
- 35: Kühleinrichtung
- 36: Lufteinlass
- 37: Luftauslass
- 38: Kühlkanal
- 39: Lüfterrad
- 40: Kühlrippe
- 41: Mantelaußenfläche
- 42: Unterkante
- 43: Mantelinnenfläche
- 44: Statoraußenfläche
- 45: Gehäusenut
- 46: Ringraum, erster
- 47: Ringraum, zweiter
- L: Luftströmungspfeil
- W: Windrichtungspfeil
- X: Fahrzeuglängsrichtung
- Y: Fahrzeugquerrichtung
- Z: Fahrzeughochrichtung

## Patentansprüche

1. Traktionsmotor (12) für ein Schienenfahrzeug (1), insbesondere für eine Lokomotive oder einen Triebzug, umfassend
- ein Motorgehäuse (19) mit einem von diesem umgrenzten Innenraum (20),
- einen im Innenraum (20) angeordneten Stator (24) mit einem am Motorgehäuse (19) drehfest befestigten, hohlzylindrischen Statorblechpaket (25), welches Statorzähne (26) und zwischen diesen angeordnete Statornuten (27) aufweist, und mit einer in den Statornuten (27) verteilt verlegten Statorwicklung (30),
- einen Rotor (32) mit einem innerhalb des Statorblechpakets (25) liegenden Rotorblechpaket (33), welches sich auf eine um eine Rotorachse (18) drehbar im Motorgehäuse (19) gelagerte Motorwelle (34) abstützt, und
- eine Kühleinrichtung (35) mit einem Lufteinlass (36) zum Zuführen von Kühlluft in den Innenraum (20), mit einem Luftauslass (37) zum Abführen von Kühlluft aus dem Innenraum (20), mit Kühlkanälen (38) zur Führung von Kühlluft innerhalb des Innenraums (20) und mit einem mit der Motorwelle (34) drehfest verbundenen Lüfterrad (39) zur Förderung von Kühlluft durch die Kühlkanäle (38),
**dadurch gekennzeichnet,**
- **dass** das Motorgehäuse (19) einen hohlzylindrischen Gehäusemantel (21) mit einem Außenkühlabschnitt (20A) und einem Innenkühlabschnitt (20I) aufweist, welche sich nicht oder zumindest teilweise nicht überlappen,
- wobei am Gehäusemantel (21) über den Außenkühlabschnitt (20A) verteilt angeordnete und radial nach außen abstehende Kühlrippen (40) für eine Wärmabfuhr durch Fahrtwind angeformt sind, und
- wobei am Gehäusemantel (21) über den Innenkühlabschnitt (20I) verteilt angeordnete Kühlkanäle (38) zur Führung von Kühlluft innerhalb des Innenraums (20) eingeformt sind.

2. Traktionsmotor (12) nach Anspruch 1,
- wobei der Außenkühlabschnitt (20A) durch eine Unterseite des Gehäusemantels (21) gebildet ist, und
- wobei die Kühlrippen (40) vertikal nach unten ragen.

3. Traktionsmotor (12) nach Anspruch 1 oder 2,
- wobei die Kühlrippen (40) parallel und in Fahrtrichtung (X) des Schienenfahrzeuges (1) ausgerichtet sind.

4. Traktionsmotor (12) nach einem der vorangehenden Ansprüche,
- wobei die Kühlrippen (40) jeweils eine horizontale Unterkante (42) aufweisen, die in einer gemeinsamen Ebene liegen.

5. Traktionsmotor (12) nach einem der vorangehenden Ansprüche,
- wobei die Kühlkanäle (38) durch in eine Mantelinnenfläche (43) des Gehäusemantels (21) eingeformte und durch eine Statoraußenfläche (44) des Statorblechpakets (25) abgedeckte Gehäusenuten (45) gebildet sind.

6. Traktionsmotor (12) nach einem der vorangehenden Ansprüche,
- wobei die Kühlkanäle (38) parallel zur Rotorachse (18) verlaufen.

7. Traktionsmotor (12) nach einem der vorangehenden Ansprüche,
- wobei der Innenraum (20) einen ersten Ringraum (46), der axial an eine erste Stirnseite des Statorblechpakets (25) grenzt und in den der Lufteinlass (36) mündet, und einen zweiten Ringraum (47), der axial an eine der ersten Stirnseite gegenüberliegende, zweite Stirnseite des Statorblechpakets (25) grenzt und aus dem der Luftauslass (37) führt, aufweist,
- wobei die Kühlkanäle (38) den ersten Ringraum (46) und den zweiten Ringraum (37) fluidisch verbinden, und
- wobei in den ersten Ringraum (36) und in den zweiten Ringraum (47) jeweils Wickelköpfe (31) der Statorwicklung (30) hineinragen.

8. Triebdrehgestell (4) für ein Schienenfahrzeug (1), insbesondere für eine Lokomotive oder einen Triebzug, umfassend
- einen Drehgestellrahmen (6),
- einen im Drehgestellrahmen (6) über Radsatzlager gelagerten Radsatz (7) mit zwei durch eine Radsatzwelle (8) drehstarr miteinander verbundenen Radscheiben (10), und
- einen sich am Drehgestellrahmen (6) abstützenden Traktionsmotor (12) nach einem der vorangehenden Ansprüche.

9. Schienenfahrzeug (1), insbesondere Lokomotive oder Triebzug, umfassend
- ein Triebdrehgestell (4) nach Anspruch 8, und
- einen sich federnd auf dem Triebdrehgestell (4) abstützenden Wagenkasten (2).
